# NEUE EUROPÄISCHE PATENTSCHRIFT

(11) **EP 1 682 733 B2**
(45) Veröffentlichungstag und Bekanntmachung des Hinweises auf die Entscheidung über den Einspruch: **26.02.2020**
(45) Hinweis auf die Patenterteilung: 28.12.2011
(21) Anmeldenummer: 04790655.7
(22) Anmeldetag: 20.10.2004
(51) Int. Cl.: E04F 13/08

(54) **BAUELEMENT ZUR HERSTELLUNG VON BODEN VERKLEIDUNGEN**
BUILDING COMPONENT FOR FORMING FLOOR COVERINGS
ELEMENT DE CONSTRUCTION POUR FORMER DES REVETEMENTS DE SOL

(30) Priorität: 24.10.2003 DE 10349790
(43) Veröffentlichungstag der Anmeldung: 26.07.2006
(73) Patentinhaber: ArsRatio GmbH, 6322 Kirchbichl (AT)
(72) Erfinder: PERMESANG, Claus, 81667 München (DE)
(74) Vertreter: Bernhardt, Reinhold
(86) Internationale Anmeldenummer: PCT/EP2004/011843
(87) Internationale Veröffentlichungsnummer: WO 2005/040521

(56) Entgegenhaltungen:
- WO-A-99/49152
- CH-A5- 683 706
- DE-A1- 2 848 303
- DE-A1- 3 932 951
- DE-A1- 4 409 223
- US-B1- 6 490 836

## Beschreibung

Die Erfindung betrifft ein Bauelement zur Herstellung von Bodenverkleidungen, z.B. zur Herstellung von Fliesen oder Parkettböden gemäß Oberbegriff des Anspruchs 1.

Aus der DE 40 26 472 C2 ist es bekannt, z.B. Fliesenböden durch Aufbringen einer Trägerlage auf einen Unterboden und Verbindung der Trägerlage mit Fliesen herzustellen. Dabei weist die Trägerlage vorstehende Steckverbindungselemente auf, die in entsprechende, an der Unterseite der Fliesen gebildete Stecktaschen eingreifen.

Bauelemente mit den eingangs erwähnten Merkmalen sind z.B. aus der DE 3036339 A1, der WO 99/49152 A, der DE-OS 2613238 und der CA 683706 A5 bekannt.

Durch solche, vorzugsweise ineinandersteckbare Bauelemente lässt sich mit geringem Aufwand in kurzer Zeit z.B. ein Fliesen- oder Parkettboden herstellen. Ebenso leicht kann der Boden auch wieder entfernt und an anderer Stelle weiterverwendet werden. Zur Anwendung insbesondere in Betracht kommen daher Ausstellungsflächen auf Messen oder in Verkaufsräumen. Anwendungsmöglichkeiten bestehen aber auch im Wohn- und Arbeitsbereich, wobei sich das Bauelement besonders für Renovierungen anbietet.

Bauelemente gemäß des Anspruch 1 lassen sich kostengünstig unter Verwendung eines Werkzeugs herstellen, in dessen Formraum Verkleidungselemente und die Trägerlage im Abstand zueinander positioniert werden und das aufzuschäumende Material eingebracht bzw. Kunststoff eingespritzt wird.

Durch die vorliegende Erfindung wird ein solches Bauelement dadurch weitergebildet, dass die Zwischenschicht unter Bildung einer um das Bauelement umlaufenden Randeinfassung angeschäumt oder angespritzt ist.

Vorteilhaft bildet die Randeinfassung, deren Breite halb so groß wie die Fugenbreite ist, einen Übergang zu benachbarten Bauelementen und dichtet den Bodenbelag durchgehend ab.

Die Unterseite der Trägerlage kann eine Profilierung oder/und ein Material mit hohem Haftreibungskoeffizienten aufweisen, die ein Gleiten auf dem Unterboden verhindert, so dass die Bodenverkleidung sogar befahrbar und zur Verwendung z.B. in Verkaufshallen für Fahrzeuge geeignet ist.

Die dem Unterboden zugewandte Seite der Trägerlage kann ferner durch eine weiche verformbare Schicht gebildet sein, die eine Anpassung an unebene Unterböden ermöglicht. Die Anforderungen an die Qualität des Unterbodens können dementsprechend gering und eine Estrichschicht ggf. überflüssig sein.

Feste stabile Trägerlagen können mit geringem Kostenaufwand aus Recyclingmaterial, insbesondere Kunststoffrecyclingmaterial, hergestellt werden. Daneben lassen sich hierfür aber auch andere Materialien, wie Spanplatten, Gipskarton oder Schaumstoffplatten verwenden.

Als Material für das Verkleidungselement kommen Keramik, Steinzeug, Naturstein, Glas, Kunststoff, Metall und/oder Holz in Betracht. Insbesondere,kann das Verkleidungselement durch ein Parkettholzstück oder Parkettlaminatelement gebildet sein.

Vorzugsweise wird die Zwischenschicht unter Ausfüllung von Fugen zwischen den Verkleidungselementen angeschäumt oder angespritzt.

Vorzugsweise besteht die Zwischenschicht aus einem elastischen oder/und wasserabweisenden Material. Aus diesem Material gebildete Fugenfüllungen dichten die Randflächen der Verkleidungselemente vorteilhaft ab. Zum Beispiel Holzverkleidungselemente, deren freiliegende Oberfläche genügend versiegelt ist, sind vor Wasseraufnahme und Aufquellung geschützt.

Vorteilhaft ist bei dem vorangehend beschriebenen Ausführungsbeispiel nur für die Zwischenschicht ein hochwertiges Material erforderlich, während die Trägerlage z.B. aus preiswertem Recyclingmaterial bestehen kann.

Auch die Einrichtungen zur Verbindung der Bauelemente werden als Steckverbindungseinrichtungen im Zuge des Anspritzens oder -schäumens der Zwischenschicht mit erzeugt und dementsprechend einstückig an die Zwischenschicht angeformt. Alternativ bestünde die Möglichkeit, separate Verbindungseinrichtungen bildende Teile mit in den Werkzeugformraum einzubringen und bei der Bildung der Zwischenschicht diese Teile mit anzuschäumen oder anzuspritzen.

Während bei Steckverbindungseinrichtungen an Steckzapfen und -löchern zu denken ist, sind gemäß der Erfindung Nut-Feder-Steckverbindungen vorgesehen, wobei Nuten und Federn am Bauelement so angeordnet sind, dass die Bauelemente senkrecht zur Ebene der Trägerlage zusammensteckbar sind. Die Nuten und Federn können sich jeweils über die gesamte Länge oder nur einen Teil einer Randseite des Bauelements erstrecken.

Vorzugsweise ist eine einrastende Steckverbindung vorgesehen, wobei z.B. ein Raststeg in eine entsprechende Rastvertiefung in der Stecknut eingreift. Der Raststeg kann sich über die gesamte oder nur einen Teil der Länge der Feder erstrecken.

Vorzugsweise weist das Bauelement an zwei zueinander senkrechten Seitenrändern eine Nut und den diesen Seitenrändern gegenüberliegenden Seitenrändern eine Feder auf. Bei einer solchen Anordnung von Nut und Federn können Bodenverkleidungen aus identisch gestalteten Bauelementen hergestellt werden.

Eine Nut kann zwischen der Trägerlage und der Verkleidungselemente aufweisenden Lage aus wenigstens einem Verkleidungselement gebildet sein.

Vorzugsweise sind die Seitenränder der Trägerlage und der Lage in Richtung der Plattenebene zueinander versetzt, so dass an einer Verbindungsstelle der Lagenrand eines Elements auf dem Trägerlagenrand des benachbarten Bauelements oder umgekehrt aufliegt. Vorteilhaft trägt bei dieser Ausgestaltung an den Verbindungsstellen nicht allein eine Verbindungsfeder auf den Boden einwirkende Lasten ab.

Als Einrichtung zur Verbindung der Bauelemente ist ein die Feder oder die Nut aufweisendes Element einstückig mit der Zwischenlage verbunden.

In weiterer Ausgestaltung der Erfindung ist es möglich, in das Bauelement, insbesondere in die Trägerlage, Rohre für eine Heizung oder Kühlung, Heizleiter oder/und Sensoren einzubetten, wobei z.B. durch Sensoren erfasst werden kann, ob eine Bodenfläche begangen wird oder nicht, oder Schaltvorgänge ausgelöst werden können, z.B. zum Anschalten von Licht oder einer Alarmanlage. Zur Einbettung solcher Komponenten kommt auch die Zwischenschicht in Betracht.

In weiterer Ausgestaltung der Erfindung kann das Bauelement Teil eines Bausystems sein, das ferner z.B. flexible, insbesondere abwinkelbare, solche Bauelemente umfaßt, wobei ein solches, z.B. mit einem elastischen Gelenkstück verbundenes Bauelement für die Verlegung am Übergang zwischen einem Boden und einer Wand oder über einer Bodenkante, z.B. am Anfang oder Ende einer Rampe, in Betracht kommt.

Das Bausystem kann elastische Gelenkverbindungselemente umfassen, die es ermöglichen, Bauelemente elastisch miteinander zu verbinden. Ferner kann das System Randabdeckungen enthalten, die z.B. in Form einer Rampe ausgebildet sind, so dass z.B. ein Übergang von einer durch die Bauelemente gebildeten Bodenfläche auf eine tieferliegende Bodenfläche geschaffen werden kann. Die Randabdeckungen können mit Leuchteinrichtungen versehen sein.

Das die Fugen zwischen den Verkleidungselementen ausfüllende Material lässt sich, z.B. unter Anpassung an die Verkleidungselemente einfärben. Ferner könnte es nachleuchten oder mit einer Oberflächenprofilierung versehen sein.

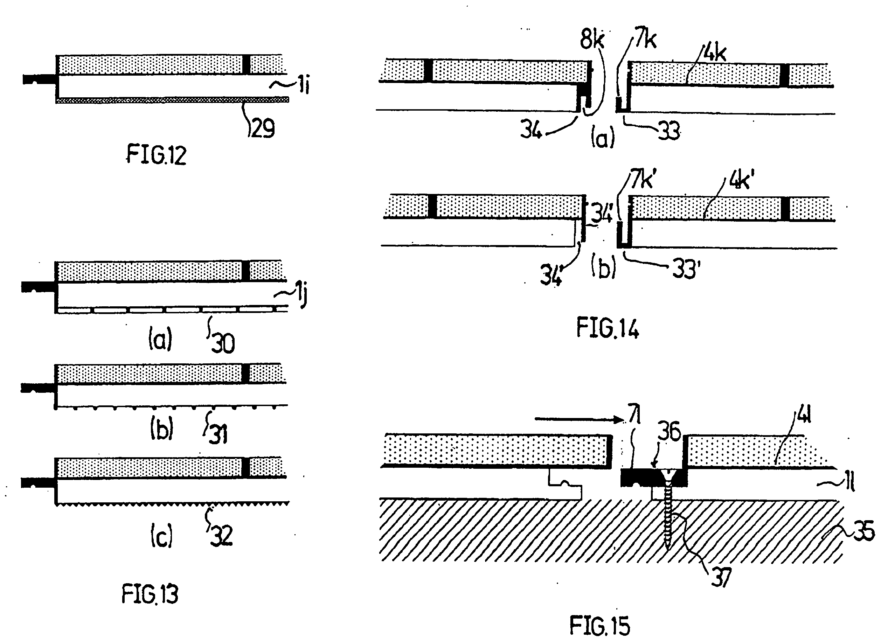

Die Erfindung ist nachfolgend anhand von Ausführungsbeispielen und der beiliegenden, sich auf diese Ausführungsbeispiele beziehenden Zeichnungen näher erläutert (wobei nur Ausführungsformen mit den aus Fig. 14 ersichtlichen Merkmalen beansprucht werden und die übrigen Figuren dem besseren Verständnis der Erfindung dienen). Es zeigen:
- Fig. 1: ein Fliesen aufweisendes Bauelement in einer Draufsicht,
- Fig. 2: das Bauelement von Fig. 1 in einer Seitenansicht,
- Fig. 3: eine Verbindungsstelle zwischen Bauelementen gemäß Fig. 1,
- Fig. 4 bis 7: Verbindungseinrichtungen von Bauelementen
- Fig. 8: ein Ausführungsbeispiel für ein Bauelement mit einer separaten Randleiste, an der eine Verbindungsfeder gebildet ist,
- Fig. 9: weitere Verbindungseinrichtungen von Bauelementen gemäß weiteren Ausführungsbeispielen,
- Fig. 10: ein Bauelement mit einem eingebetteten Sensor,
- Fig. 11: ein Bauelement in das Heiz- oder Kühlrohre eingebettet sind,
- Fig. 12: ein Bauelement mit einer weichen verformbaren Schicht an der Unterseite,
- Fig. 13: Bauelemente mit verschiedenen Oberflächenprofilen an der Unterseite,
- Fig. 14: Verbindungseinrichtungen von Bauelementen gemäß Ausführungsbeispielen nach der Erfindung,
- Fig. 15: ein Ausführungsbeispiel für die Befestigung von Bauelementen an einem Unterboden oder einer Wand,
- Fig. 16 und 17: weitere Ausführungsbeispiele für die Befestigung von Bauelementen an einem Unterboden,
- Fig. 18: eine Verbindungsstelle zwischen einer Boden- und einer Wandverkleidung,
- Fig. 19: weitere Ausführungsbeispiele für Verbindungsstellen zwischen einer Boden- und einer Wandverkleidung oder zwei in einer Ecke zusammenstoßender Wandverkleidungen,
- Fig. 20: ein Ausführungsbeispiel für die Verbindung einer Bodenverkleidung mit einer Wandverkleidung und für eine Befestigung der Wandverkleidung,
- Fig. 21: Ausführungsbeispiele für den Rand einer Wandverkleidung abdeckende Verblendungsleisten,
- Fig. 22 und 23: Bauelemente mit einem elastischen Gelenkstück,
- Fig. 24: zwischen Bauelementen nach der Erfindung einsetzbare elastische Gelenkverbindungselemente,
- Fig. 25: weitere Ausführungsbeispiele für Gelenkverbindungselemente,
- Fig. 26: ein Ausführungsbeispiel für eine Verbindungsstelle zwischen Wandverkleidungen an einer vorspringenden Raumecke,
- Fig. 27: weitere Ausführungsbeispiele für Verbindungsstellen zwischen einer Boden- und einer Wandverkleidung, und
- Fig. 28: ein weiteres Ausführungsbeispiel für ein Bauelement mit einer dreidimensionalen Oberfläche.

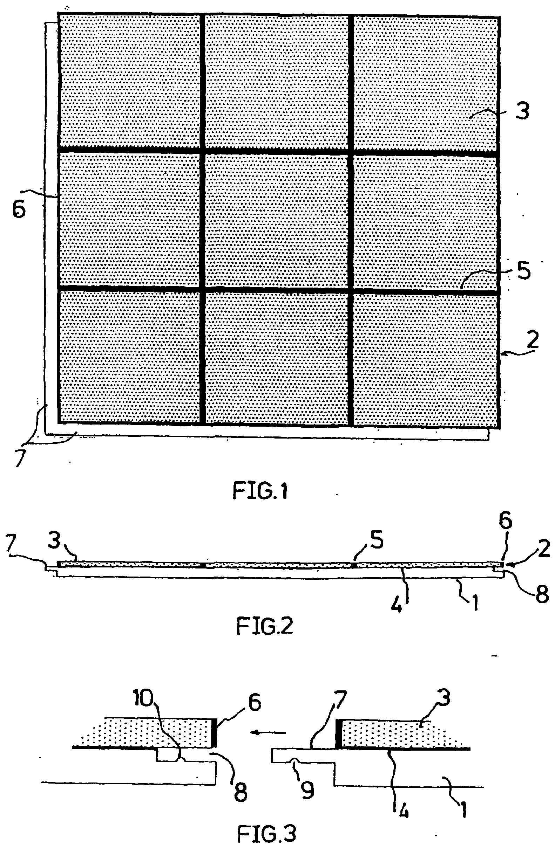

Ein in Fig. 1 gezeigtes Bauelement zur Herstellung von Boden- oder Wandverkleidungen weist eine plattenförmige Trägerlage 1 und eine mit der Trägerlage verbundene Lage 2 auf, die in dem betreffenden Ausführungsbeispiel durch neun Fliesen 3 gebildet ist. Anstelle von Fliesen kommen Verkleidungselemente aus allen für Wand- oder Bodenverkleidungen geeigneten Materialien in Betracht.

Die Trägerlage 1 ist mit der Lage 2 über eine Zwischenschicht 4 aus PU-Schaum verbunden. Die Zwischenschicht 4 wurde in einem die Fliesen 3 und die Trägerlage 1 aufnehmenden Werkzeughohlraum an die Trägerlage und die Fliesen angeschäumt. Im Zuge der Anschäumung wurden Fugen zwischen den Fliesen durch geschäumte Stege 5 ausgefüllt und eine um die Lage 2 umlaufende Randeinfassung 6 gebildet, wobei die Breite der Randeinfassung halb so groß wie die Breite der Stege 5 ist.

Wie die Fig. 1 bis 3 ferner erkennen lassen, sind an zueinander senkrechten Rändern des Bauelements durch Randabstufungen der Trägerlage 1 Federn 7 gebildet. Durch umgekehrte Randabstufungen an den betreffenden gegenüberliegenden Rändern der Trägerlage 1 ergeben sich zwischen der Trägerlage und der Lage 2 Nuten 8. Anstelle durchgehender Federn könnten sich nur über einen Teil der Länge des Plattenseitenrands erstreckende Laschen oder Steckbolzen und jeweils entsprechende Steckeraufnahmen vorgesehen sein.

Wie in Fig. 3 sichtbar ist, erstreckt sich entlang den Federn 7 eine Rastrille 9. Entsprechend ist innerhalb der Nut 8 ein Raststeg 10 gebildet.

Aus plattenartigen Bauelementen gemäß Fig. 1 bis 3 lassen sich z.B. Fliesenböden bilden, wobei die auf den Boden verlegten Bauelemente in Richtung parallel zur Plattenebene zusammengesteckt werden, wobei die Federn 7 in die Nuten 8 benachbarter Elemente eingreifen. Durch Einrastung der Raststege 10 in die Rastrillen 9 wird eine stabile Verbindung erreicht und gegenseitigen Verschiebungen der Bauelemente auf dem Boden entgegengewirkt.

Die kostengünstig aus einem Kunststoffrecyclingmaterial hergestellte Trägerlage 1 ist stabil und verleiht dem Bauelement hohe Festigkeit. Der elastische und wasserabweisende PU-Schaum dichtet die Fugen zwischen den Fliesen 3 zuverlässig ab.

In den nachfolgenden Figuren werden gleiche oder gleichwirkende Teile mit derselben Bezugszahl wie in den vorangehenden Figuren bezeichnet, wobei der betreffenden Bezugszahl der Buchstabe a, b usw. beigefügt ist.

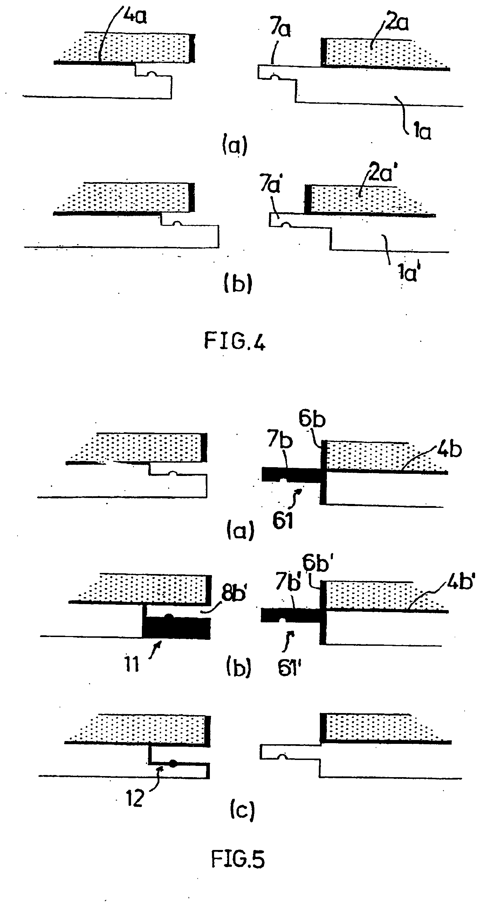

Die Ausführungsbeispiele von Fig. 4a und 4b unterscheiden sich von dem vorangehenden Ausführungsbeispiel dadurch, dass die Ränder einer Trägerlage 1 a bzw. 1 a' und einer darauf angeordneten Fliesenlage 2a bzw. 2a' unter Bildung einer Konsole in Richtung der Plattenebene versetzt zueinander angeordnet sind. Eine hohe Scherbelastung der Feder 7a bzw. 7a' wird vermieden.

Während bei den vorangehenden Ausführungsbeispielen die Federn durch Randausnehmungen an der Trägerlage gebildet sind, ist bei den Ausführungsbeispielen von Fig. 5a und b eine Feder 7b bzw. 7b' an einem Element 61 bzw. 61' ausgebildet, das einstückig in einem Arbeitsgang mit einer Zwischenschicht 4b bzw. 4b' hergestellt ist. Eine Randeinfassung 6b bzw. 6b', von der die Feder vorsteht, erstreckt sich über die gesamte Höhe des Bauelements. Ein beim Schäumen oder Spritzen der Zwischenschicht 4b' mitgeformtes Element 11 bildet eine Nut 8b'.

Bei dem Ausführungsbeispiel von Fig. 5c ist ein dem Element 11 ähnliches Element 12 gebildet, das an eine Randabstufung der Trägerlage angepasst ist. Diese in den Abmessungen sehr genau herstellbare und flexible Ausführungsform ermöglicht ein besonders leichtes und problemloses Einrasten sowie eine wirksame Abdichtung.

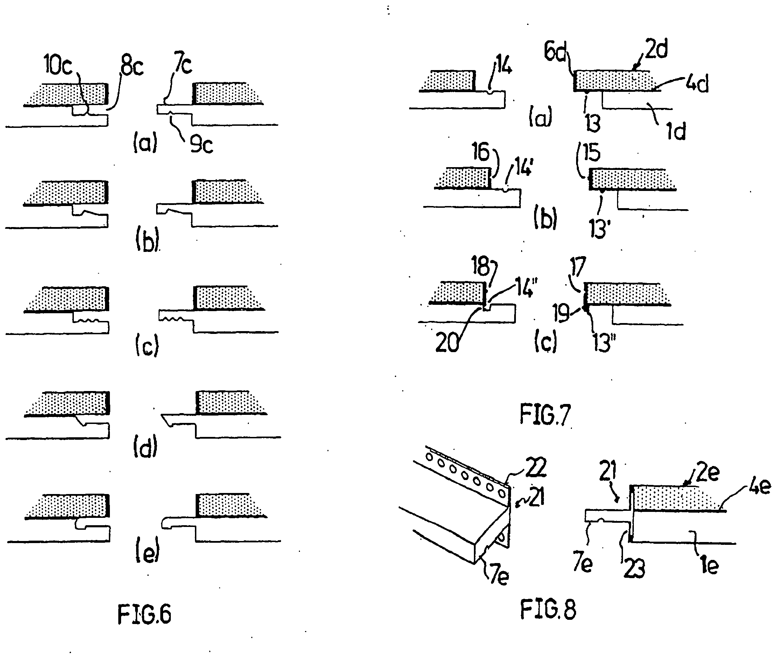

Fig. 6 zeigt verschiedene Querschnittsformen von Federn 7c und Nuten 8c bzw. von Raststegen 10c und Rastrillen 9c, wobei die Ausführungsbeispiele von Fig. 6d und e eine besonders schwer lösbare Verhakung ermöglichen.

Fig. 7 zeigt Ausführungsformen mit konstruktiv vereinfachten Verbindungselementen. Die Ränder einer Trägerlage 1 d und einer darauf angeordneten Fliesenlage 2d sind in Richtung der Plattenebene zueinander versetzt angeordnet, so dass im Verbindungsbereich Trägerlage und Fliesenlage lediglich einander überlappen.

Ein an einer Zwischenschicht 4d gebildeter Raststeg 13 bzw. 13' rastet in einer Rastrille 14 bzw. 14' an der Trägerlage 1 d ein. Bei dem Ausführungsbeispiel von Fig. 7b sind an einer Randeinfassung 6d zusätzlich ein Raststeg 15 und eine Rastrille 16 an gegenüberliegenden Seiten der Fliesenlage 2d gebildet.

Das Ausführungsbeispiel von Fig. 7c weist an den betreffenden Stellen in vertauschter Anordnung eine Rastrille 17 und einen Raststeg 18 auf. Ein Raststeg 13", der unmittelbar am Rand der Fliesenlage 2d angeordnet ist, greift in eine entsprechend angeordnete Rastrille 14" ein, wobei in der Rastrille 14" eine weitere Rastrille 20 für den Eingriff eines am Raststeg 13" vorgesehenen Raststegs 19 gebildet ist.

Wie aus Fig. 8 hervorgeht, kann eine Feder 7e durch eine z.B. im Kunststoffstrangguss- oder Ziehverfahren oder aus Metall hergestellte, gesonderte Schiene 21 gebildet sein, welche über ein Fußteil 22 mit einem Bauelement verbunden ist. Der Fußteil lässt sich bei der Herstellung einer Zwischenschicht 4e in einem Werkzeug durch Anspritzen oder-schäumen mit dem Bauelement verbinden, wie bei 23 angedeutet ist. In der Schiene 21 gebildete Löcher nehmen angespritztes oder geschäumtes Material auf und tragen so zur Festigkeit der Verbindung mit dem Bauelement bei.

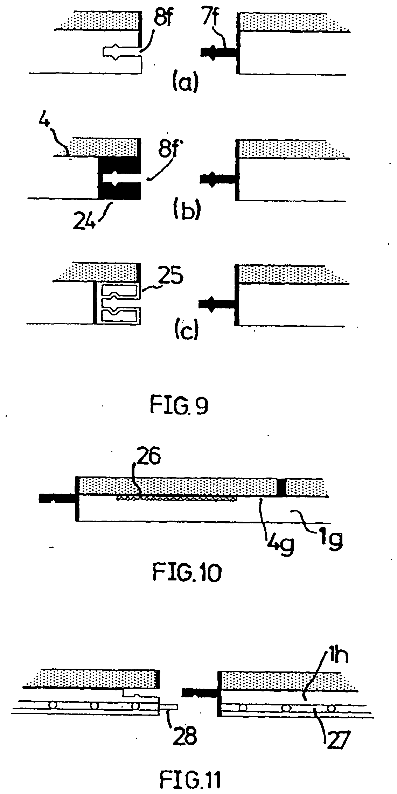

Fig. 9 zeigt Bauelemente mit Federn 7f und Nuten 8f, die beidseitig mit einem Raststeg bzw. einer Rastrille versehen sind.

Bei dem Ausführungsbeispiel von Fig. 9b ist ein Element 24, das eine Rastnut 8f' aufweist, einstückig mit einer Zwischenschicht 4f verbunden.

Wie Fig. 9c zeigt, kann ein ähnliches Element 25 auch als separates Teil zB. aus Kunststoff oder Metall hergestellt und mit dem übrigen Bauelement z.B. durch Kleben, Anspritzen oder-schäumen verbunden sein.

Fig. 10 zeigt ein Bauelement, in das ein Drucksensor 26 zwischen einer Trägerlage 1 g und einer Zwischenschicht 4g eingebettet ist. An den Sensor 26 geführte, in Fig. 10 nicht sichtbare Anschlussleitungen können in die Zwischenschicht 4g eingeschäumt sein.

Fig. 11 zeigt ein Ausführungsbeispiel für ein Bauelement mit einer Trägerlage 1 h, in die Rohre 27, durch die ein Heiz oder Kühlmedium strömen kann, eingebettet sind. Bei der mechanischen Verbindung der Bauelemente wird eine Rohrverbindung über Anschlussstücke 28 hergestellt. Rohre könnten auch in eine verdickte Zwischenschicht oder eine weitere, unter der Trägerplatte angeordnete Lage eingebettet sein, wobei die weitere Lage in einem Arbeitsgang mit einer Zwischenschicht insbesondere durch Anschäumen oder-spritzen an die Trägerplatte gebildet sein kann.

Aus Fig. 12 geht ein Bauelement mit einer Trägerlage 1i hervor, an deren Unterseite eine weiche, verformbare Schicht 29 gebildet ist. Vorteilhaft können sich solche Bauelemente an einen unebenen, estrichlosen Unterboden anpassen. Die Schicht kann auch aus einem Material gebildet sein oder eine Oberfläche aufweisen, das bzw. die eine hohe Haftreibung aufweist, welche Verschiebungen des Bauelements auf dem Boden entgegenwirkt.

Fig. 13 zeigt Bauelemente mit unterschiedlichen Bodenprofilierungen 30 bis 32 an einer Trägerlage 1 j. Die Bodenprofilierung kann auch tiefe, zur Verlegung von Leitungen geeignete Rillen aufweisen.

Während die vorangehenden Ausführungsbeispiele für Bauelemente Rastnuten und Raststege zeigen, die bei Verschiebung der Bauelemente parallel zur Plattenebene ineinander eingreifen, gehen aus Fig. 14 zwei Bauelemente hervor, bei denen eine Nut-Feder-Verbindung durch Bewegung der Bauelemente senkrecht zur Plattenebene hergestellt werden kann.

Fig. 14 zeigt einstückig mit einer Zwischenschicht 4k bzw. 4k' verbundene Elemente 33 und 34 bzw. 33' und 34', wobei an dem Element 33 bzw. 33' eine Feder 7k bzw. 7k' und dem Element 34 bzw. 34' eine Nut 8k bzw. 8k' gebildet ist.

Eine Möglichkeit zur Befestigung von Bauelementen nach der Erfindung an einem Unterboden 35 geht aus Fig. 15 hervor. Das dort gezeigte Bauelement entspricht dem Bauelement von Fig. 4a mit dem Unterschied, dass eine Feder 71 durch ein einstückig mit einer Zwischenschicht 41 verbundenes Element 36 gebildet ist, das eine Randstufe an einer Trägerlage 11 ausfüllt. Im Bereich der Randstufe ist eine Befestigung am Unterboden 35 durch eine Schraube 37 gebildet. Eine Öffnung für die Schraube 37 ist zweckmäßig in dem Element 36 vorgefertigt.

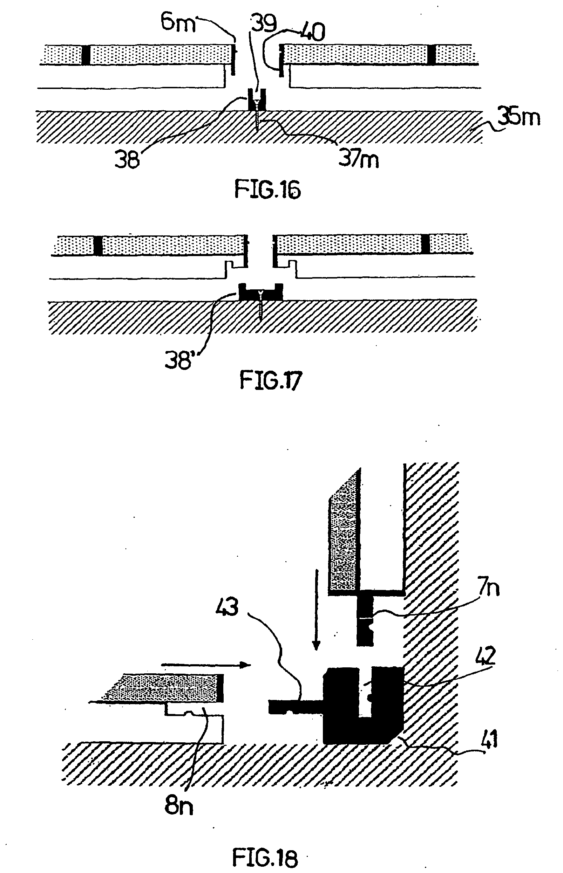

Fig. 16 und 17 zeigen Befestigungselemente 38 und 38' zur horizontalen Festlegung von Bauelementen an einem Unterboden 35m durch eine Schraube 37m. In eine Nut 39 des Elements 38 greifen Verlängerungen 40 einer Randeinfassung 6m ein. Zur schnellen Auswechslung von Bauelementen lässt sich die Verbindung leicht durch Anhebung der Bauelemente lösen. Eine zu leichte Lösung der Verbindung verhindern eine Nut und eine Feder in der Randeinfassung 6m.

Aus Fig. 18 geht ein in einer Ecke zwischen einem Boden und einer Wand anzuordnendes Verbindungselement 41 mit einer Nut 42 und einer Feder 43 hervor. In die Nut 42 lässt sich eine Feder 7n eines an der Wand verlegten Bauelements einführen, während die Feder 43 des Verbindungselements 41 in eine Nut 8n eines am Boden verlegten Bauelements eingreift.

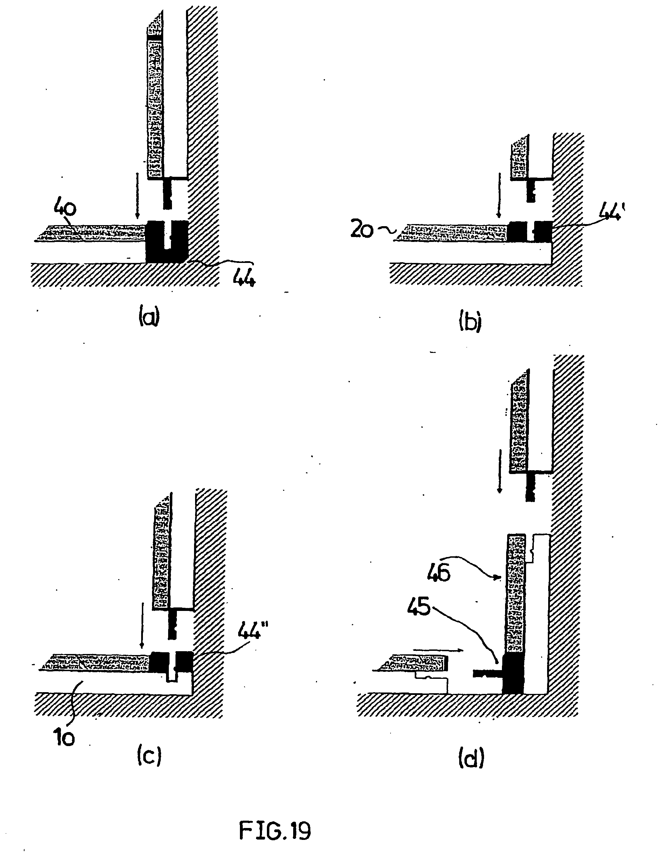

Wie aus Fig. 19a hervorgeht, kann ein dem Verbindungselement 41 ähnliches Verbindungselement 44 auch direkt an ein gesondertes, für die Verlegung an Ecken vorgesehenes Bauelement angeschäumt oder angespritzt und insbesondere mit einer Zwischenschicht 4o einstückig verbunden, d.h. in einem Arbeitsgang mit dieser sein.

Ein Verbindungselement 44' kann sich gemäß Fig. 19b nur über die Tiefe einer Fliesenlage 2o erstrecken.

Gemäß Fig. 19c ist eine durch ein Verbindungselement 44" gebildete Nut in eine Basisplatte 1o hinein verlängert.

Fig. 19d zeigt ein Verbindungsstück 45, das an ein gesondertes, als Endstück vorgesehenes Bauelement 46 angespritzt oder-geschäumt und mit einer Feder versehen ist.

Das Bauelement 46 wie auch die gesonderten Bauelemente gemäß Fig. 19a bis c sind jeweils mit einem Standard-Bauelement verbindbar.

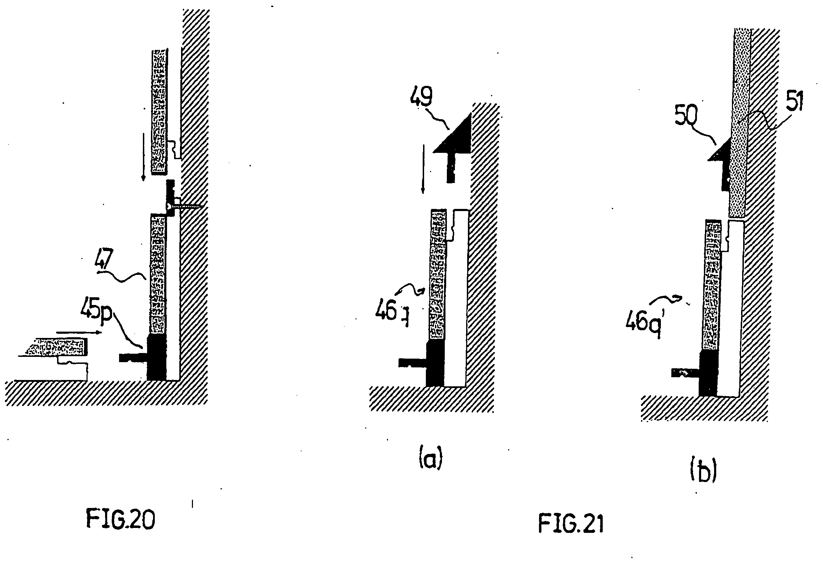

Aus Fig. 20 geht eine Befestigung eines als Endstück vorgesehenen weiteren Sonder-Bauelements 47 an einer Wand hervor, wobei diese Verbindung der in Fig. 5 gezeigten Verbindung eines Bauelements mit einem Boden entspricht.

Fig. 21 zeigt Ausführungsbeispiele für Randverblendungen 49 und 50, welche über eine Feder auf den freien Rand eines Bauelements 46q bzw. 46q' aufsteckbar sind. Die Randverblendung 50 lässt Raum für eine sich an das Bauelement 46q' anschließende Putz- oder Verblendungsschicht 51.

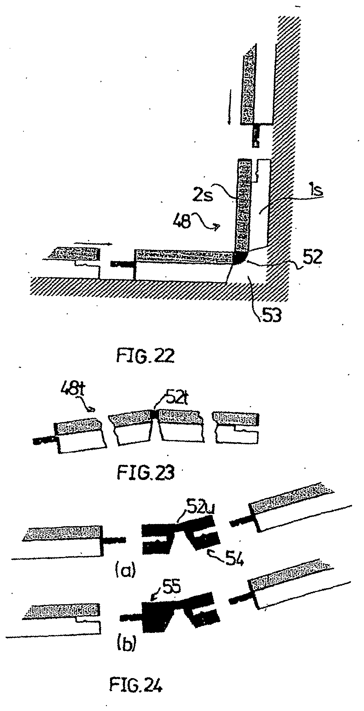

Fig. 22 zeigt ein Bauelement 48, das zur Anordnung in einer Wandecke vorgesehen ist und ein elastisches Gelenkstück 52 aufweist, das Abwinklungen bis zu 90° und darüber ermöglicht. In dem betreffenden Ausführungsbeispiel ist das Gelenkstück 52 in eine Fliesenlage 2s, z.B. durch Anspritzen oder-schäumen, eingefügt, während eine mit der Fliesenlage verbundene Trägerlage 1s bei 53 unterbrochen ist.

Fig. 23 zeigt ein zur Verlegung auf unebenen Böden geeignetes Bauelement 48t mit einem elastischen Gelenkstück 52t, das über Bodenkanten, z.B. am Anfang und Ende einer Rampe, verlegt werden kann. Es ist denkbar, mehrere solche Gelenkstücke und entsprechende Aussparungen 53t in der Trägerlage vorzusehen. Aussparungen 53t lassen sich werkseitig oder auch nach Bedarf vor Ort einfräsen.

Wie aus Fig. 24 hervorgeht, sind zur Verlegung über solche Bodenkanten auch Gelenkverbindungsstücke 54 und 55 verwendbar, von denen das Verbindungsstück 55, das sowohl eine Feder als auch eine Nut aufweist, an einer möglichen Verbindungsstelle zwischen den Elementen eingesetzt werden kann.

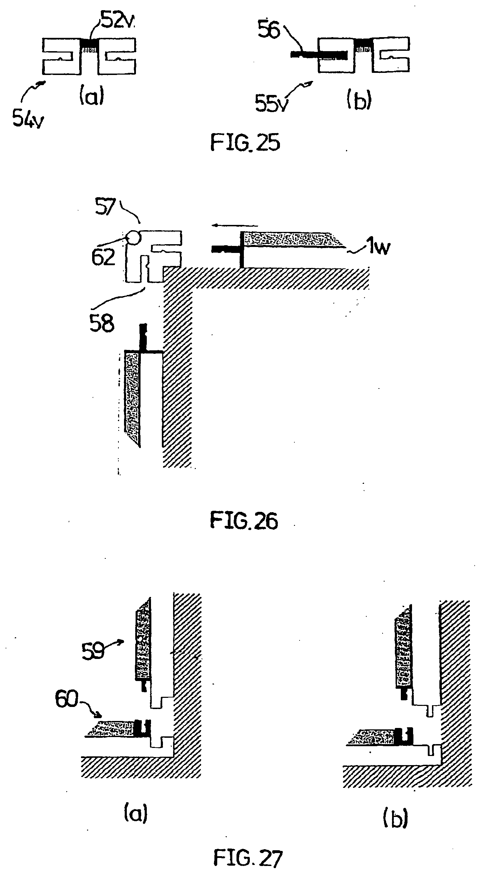

Während die Gelenkverbindungsstücke 54 und 55 aus elastischem Material einstückig mit einem Gelenkstück 52u hergestellt sind, bestehen in Fig. 25 dargestellte Gelenkverbindungsstücke 54v und 55v aus Metall und weisen lediglich ein elastisches Gelenkstück 52v auf, das an die Metallteile angeklebt, angeschäumt oder angespritzt ist. Das Gelenkverbindungselement 55v ist mit einem Kunststoffteil 56 zur Bildung einer Feder versehen.

Fig. 26 zeigt ein Verbindungselement 57, das für die Anordnung an einer vorspringenden Raumecke vorgesehen sein kann und zwei zueinander im Winkel von 90° stehende Stecknuten 58 und ein Eckenschutzelement 62 aufweist. Das Eckenschutzelement 62 besteht in dem betrachteten Ausführungsbeispiel aus Edelstahl und ist durch Anschäumung oder Spritzung an dem übrigen Verbindungselement 57 befestigt.

Aus Fig. 27 gehen weitere Ausführungsbeispiele für Eckenverbindungen hervor, bei denen ein Bauelement 59 sowohl an einer Trägerlage als auch einer mit der Trägerlage verbundenen Fliesenlage jeweils eine Feder und ein Bauelement 60 an seiner Grundplatte wie auch an seiner Fliesenlage eine Stecknut aufweist.

Abweichend von den vorangehend beschriebenen Ausführungsbeispielen könnte das Bauelement auch als Ganzes gebogen sein und z.B. zur Verkleidung runder Säulen dienen.

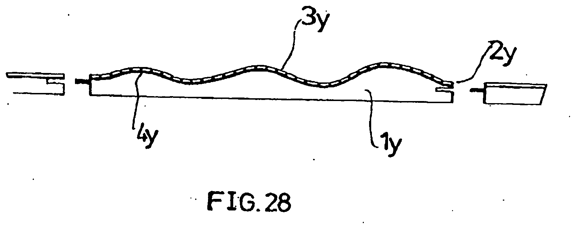

Alternativ könnte aber auch nur die Oberfläche gebogen sein. Ein solches Bauelement mit einer dreidimensionalen Oberfläche geht aus Fig. 28 hervor. Eine Trägerlage 1y weist eine dreidimensional geformte Oberfläche auf. Über eine Zwischenschicht 4y ist eine Oberflächenlage 2y aus schmalen Verkleidungselementen 3y mit der Trägerlage 1y verbunden und in der Form an deren Oberfläche angepasst. Die schmalen Verkleidungselemente 3y können in einem ersten Produktionsschritt durch eine Folie oder ein Netz miteinander verbunden werden. Eine solche Anordnung lässt sich in einem Formraum eines Werkzeugs unterbringen. Die Zwischenschicht wird dann unter Verbindung von Trägerlage 1y und Oberflächenlage 2y an die genannte Folie oder das Netz angeschäumt.

## Patentansprüche

1. Bauelement zur Herstellung auf einem Trägerboden lose aufliegender Bodenverkleidungen,
mit einer Trägerlage (1) und einer mit der Trägerlage verbundenen, eine Bodenoberfläche bildenden weiteren Lage (2) aus wenigstens einem Verkleidungselement (3) sowie mit Einrichtungen (33,34;33',34') zur Verbindung mit weiteren auf dem Trägerboden verlegten solchen Bauelementen,
wobei zwischen der Trägerlage (1) und der weiteren Lage (2) eine gegenüber den Lagen (1,2) dünnere Zwischenschicht (4) gebildet und die Trägerlage (1) über die Zwischenschicht (4) mit dem wenigstens einen Verkleidungselement (3) verbunden ist,
**dadurch gekennzeichnet,**
**dass** die Zwischenschicht (4) an das wenigstens eine Verkleidungselement (3) und die Trägerlage (1) in einem das wenigstens eine Verkleidungselement (3) und die Trägerlage (1) zueinander im Abstand aufnehmenden Formraum eines Formwerkzeugs unter Bildung einer um das Bauelement umlaufenden Randeinfassung (6) von halber Fugenbreite sowie unter Bildung der Einrichtungen (33,34;33',34') zur Verbindung mit weiteren solchen Bauelementen angeschäumt oder angespritzt ist,
wobei die Randeinfassung (6) und die Verbindungseinrichtungen jeweils einstückig mit der Zwischenschicht (4) verbunden sind
und es sich bei den Verbindungseinrichtungen um Elemente (33,34;33',34') für die Herstellung einer Nut-Feder-Verbindung durch Bewegung der Bauelemente senkrecht zum Trägerboden handelt.

2. Bauelement nach Anspruch 1,
**dadurch gekennzeichnet,**
**dass** die Zwischenschicht (4) unter Ausfüllung von Fugen zwischen mehreren Verkleidungselementen (3) angeschäumt oder angespritzt ist.

3. Bauelement nach einem der Ansprüche 1 bis 2,
**dadurch gekennzeichnet,**
**dass** die Zwischenschicht (4) aus einem elastischen oder/und wasserabweisenden Material hergestellt ist.

4. Bauelement nach einem der Ansprüche 1 bis 3,
**dadurch gekennzeichnet,**
**dass** die Trägerlage (1) aus einem Recyclingmaterial, insbesondere Kunststoffrecyclingmaterial, hergestellt ist.

5. Bauelement nach einem der Ansprüche 1 bis 4,
**dadurch gekennzeichnet,**
**dass** das Verkleidungselement aus Keramik, Steinzeug, Naturstein, Glas, Kunststoff, Metall oder/und Holz hergestellt ist.

6. Bauelement nach einem der Ansprüche 1 bis 5,
**dadurch gekennzeichnet,**
**dass** an zwei zueinander senkrechten Seiten eine Nut (8) und den diesen Seiten gegenüberliegenden Seiten eine Feder (7) gebildet ist.

7. Bauelement nach einem der Ansprüche 1 bis 6,
**dadurch gekennzeichnet,**
**dass** die Ränder der Trägerlage (1 q) und der das Verkleidungselement umfassenden Lage (2q) parallel zur Ebene der Trägerlage zueinander versetzt angeordnet sind.

8. Bauelement nach einem der Ansprüche 1 bis 7,
**dadurch gekennzeichnet,**
**dass** die Trägerlage (1) auf ihrer der Lage (2) abgewandten Seite eine Oberflächenprofilierung (30-32) oder/und eine weiche, verformbare Schicht (29) aufweist.

9. Bauelement nach einem der Ansprüche 1 bis 8,
**dadurch gekennzeichnet,**
**dass** in das Bauelement, insbesondere in die Trägerlage, Rohre (27) für eine Heizung oder/und Kühlung, Heizleiter oder/und Sensoren (26) eingebettet sind.

10. Bauelement nach einem der Ansprüche 1 bis 9,
**dadurch gekennzeichnet,**
**dass** das Bauelement Teil eines flexiblen, solche Bauelemente (48) umfassenden Bausystems ist.

11. Bauelement nach Anspruch 10,
**dadurch gekennzeichnet,**
**dass** das flexible Bauelement (48) ein elastisches Gelenkstück (52) umfasst.

12. Bauelement nach Anspruch 10 oder 11,
**dadurch gekennzeichnet,**
**dass** das Bausystem elastische Gelenkverbindungselemente (54,55) für die Verbindung von Bauelementen sowie Randverblendungselemente (49,50) umfasst.

13. Bauelement nach einem der Ansprüche 1 bis 12,
**dadurch gekennzeichnet,**
**dass** das Bauelement als Ganzes gebogen ist oder/und eine gebogene Oberfläche aufweist.

## Claims

1. Building component for constructing floor coverings that bear loosely on a supporting floor, having a support layer (1) and a further layer (2) of at least one covering element (3), which layer is connected to the support layer and forms a floor surface, as well as devices (33, 34; 33', 34') for connecting to further such building components laid on the supporting floor,
wherein between the support layer (1) and the further layer (2) an intermediate course (4) that is thinner in comparison to the layers (1, 2) is formed, and the support layer (1) by way of the intermediate course (4) is connected to the at least one covering element (3),
**characterized in that**
the intermediate course (4) in a moulding cavity of a moulding tool that receives the at least one covering element (3) and the support layer (1) at a mutual spacing, while forming a peripheral edging (6) of half a joint width that encircles the building component, and while forming the devices (33, 34; 33', 34') for connecting to further such building components, is foamed on or sprayed on the at least one covering element (3) and the support layer (1),
wherein the peripheral edging (6) and the connection devices are in each case integrally connected to the intermediate course (4), and
the connection devices are elements (33, 34; 33' 34') for producing a tongue-and-groove connection by moving the building components perpendicularly to the supporting floor.

2. Building component according to Claim 1, **characterized in that** the intermediate course (4) is foamed on or sprayed on in tandem with the filling of joints between a plurality of covering elements (3).

3. Building component according to one of Claims 1 to 2, **characterized in that** the intermediate course (4) is made from an elastic and/or water-repellant material.

4. Building component according to one of Claims 1 to 3, **characterized in that** the support layer (1) is made from a recycled material, especially plastics recycled material.

5. Building component according to one of Claims 1 to 4, **characterized in that** the covering element is made from ceramic, stoneware, natural stone, glass, plastic, metal and/or wood.

6. Building component according to one of Claims 1 to 5, **characterized in that** on two mutually perpendicular sides there is formed a groove (8) and on the sides situated opposite these sides there is formed a tongue (7).

7. Building component according to one of Claims 1 to 6, **characterized in that** the margins of the support layer (1q) and of the layer (2q) comprising the covering element are arranged, mutually offset, parallel to the plane of the support layer.

8. Building component according to one of Claims 1 to 7, **characterized in that** the support layer (1), on its side facing away from the layer (2), has a surface profiling (30-32) and/or a soft, deformable course (29).

9. Building component according to one of Claims 1 to 8, **characterized in that** embedded in the building component, especially in the support layer, are pipes (27) for a heating and/or cooling system, heating conductors and/or sensors (26).

10. Building component according to one of Claims 1 to 9, **characterized in that** the building component is part of a flexible building system comprising such building components (48).

11. Building component according to Claim 10, **characterized in that** the flexible building component (48) comprises an elastic hinged piece (52) .

12. Building component according to Claim 10 or 11, **characterized in that** the building system comprises elastic hinged connecting elements (54, 55) for the connection of building components and of margin facing elements (49, 50).

13. Building component according to one of Claims 1 to 12, **characterized in that** the building component is curved in its entirety and/or has a curved surface.

## Revendications

1. Elément de construction pour la réalisation de revêtements de sol placés de manière flottante sur un sol support,
présentant une couche support (1) et une autre couche (2), assemblée avec la couche support, formant une surface de sol, en au moins un élément de revêtement (3), ainsi que des dispositifs (33, 34 ; 33', 34') destinés à un assemblage avec d'autres de ces éléments de construction placés sur le sol support,
une couche intermédiaire (4) plus mince que les couches (1, 2) étant formée entre la couche support (1) et l'autre couche (2) et la couche support (1) étant assemblée via la couche intermédiaire (4) avec ledit au moins un élément de revêtement (3), **caractérisé**
**en ce que** la couche intermédiaire (4) est moussée ou injectée sur ledit au moins un élément de revêtement (3) et sur la couche support (1) dans un espace de façonnage, recevant ledit au moins un élément de revêtement (3) et la couche support (1) à une certaine distance l'un de l'autre, d'un outil de façonnage avec formation d'une bordure (6) périphérique encerclant l'élément de construction, d'une demi-largeur de joint ainsi qu'avec formation des dispositifs (33, 34 ; 33', 34') pour l'assemblage avec d'autres de ces éléments de construction,
la bordure (6) périphérique et les dispositifs d'assemblage étant assemblés à chaque fois sous forme d'une seule pièce avec la couche intermédiaire (4) et les dispositifs d'assemblage étant des éléments (33, 34 ; 33', 34') pour la réalisation d'un assemblage par rainure-languette par déplacement des éléments de construction perpendiculairement au sol support.

2. Elément de construction selon la revendication 1, **caractérisé**
**en ce que** la couche intermédiaire (4) est moussée ou injectée en remplissant les joints entre plusieurs éléments de revêtement (3).

3. Elément de construction selon l'une quelconque des revendications 1 à 2, **caractérisé**
**en ce que** la couche intermédiaire (4) est réalisée en un matériau élastique et/ou hydrophobe.

4. Elément de construction selon l'une quelconque des revendications 1 à 3, **caractérisé**
**en ce que** la couche support (1) est réalisée en un matériau recyclé, en particulier un matériau synthétique recyclé.

5. Elément de construction selon l'une quelconque des revendications 1 à 4, **caractérisé**
**en ce que** l'élément de revêtement est réalisé en céramique, en grès, en pierre naturelle, en verre, en matériau synthétique, en métal et/ou en bois.

6. Elément de construction selon l'une quelconque des revendications 1 à 5, **caractérisé**
**en ce qu'**une rainure (8) est formée sur deux côtés perpendiculaires l'un à l'autre et une languette (7) est formée sur les côtés opposés à ces côtés.

7. Elément de construction selon l'une quelconque des revendications 1 à 6, **caractérisé**
**en ce que** les bords de la couche support (1a) et ceux de la couche (2a) encerclant l'élément de revêtement sont disposés parallèlement au plan de la couche support, de manière décalée les uns par rapport aux autres.

8. Elément de construction selon l'une quelconque des revendications 1 à 7, **caractérisé**
**en ce que** la couche support (1) présente, sur la face opposée à la couche (2), un profil de surface (30-32) ou/et une couche souple, déformable (29).

9. Elément de construction selon l'une quelconque des revendications 1 à 8, **caractérisé**
**en ce que** des tubes (27) pour un chauffage et/ou un refroidissement, des conducteurs chauffants et/ou des capteurs (26) sont enrobés dans l'élément de construction, en particulier dans la couche support.

10. Elément de construction selon l'une quelconque des revendications 1 à 9, **caractérisé**
**en ce que** l'élément de construction fait partie d'un système de construction souple, encerclant ces éléments de construction (48).

11. Elément de construction selon la revendication 10, **caractérisé**
**en ce que** l'élément de construction souple (48) comprend une pièce articulée élastique (52).

12. Elément de construction selon la revendication 10 ou 11, **caractérisé**
**en ce que** le système de construction comprend des éléments d'assemblage articulés élastiques (54,55) pour l'assemblage des éléments de construction ainsi que des éléments d'habillage du bord (49,50).

13. Elément de construction selon l'une quelconque des revendications 1 à 12, **caractérisé**
**en ce que** l'élément est courbé dans sa totalité et/ou présente une surface courbée.
